# EUROPEAN PATENT APPLICATION

(11) **EP 3 971 085 A1**
(43) Date of publication of application: **23.03.2022**
(21) Application number: 19929576.7
(22) Date of filing: 31.12.2019
(51) Int. Cl.: B64C 39/02, B64C 1/06, B64C 35/00

(54) **UNMANNED AERIAL VEHICLE COMPONENT, ARM, COUNTERWEIGHT FLOAT, AND UNMANNED AERIAL VEHICLE**

(30) Priority: 20.05.2019 CN 201910426335; 09.09.2019 CN 201910850381
(71) Applicant: Powervision Tech (Suzhou) Ltd., Changshu City Suzhou, Jiangsu 215500 (CN)
(72) Inventor: LIU, Wei, Suzhou, Jiangsu 215500 (CN); CHEN, Longfei, Suzhou, Jiangsu 215500 (CN)
(74) Representative: Straus, Alexander
(86) International application number: PCT/CN2019/130770
(87) International publication number: WO 2020/233132

(57) **Abstract**

The present application provides an unmanned aerial vehicle (UAV) assembly that plays a waterproof role and is configured to prevent a UAV part inside the assembly from contacting with water; and the assembly comprises a first component comprising at least one opening, and a second component configured to seal the opening of the first component so as to prevent water from pouring into the assembly from the opening. The present patent application extends the applicable range of ordinary UAV parts and enables the ordinary UAV parts to have the waterproof function.

## Description

### CROSS-REFERENCE TO RELATED APPLICATIONS

The present application claims priority to the Chinese Patent Application No. 2019104263352, filed on May 20, 2019 with the Chinese Patent Office and entitled "Unmanned Aerial Vehicle Assembly and Unmanned Aerial Vehicle", and the Chinese Patent Application No. 2019108503815, filed on September 9, 2019 with the Chinese Patent Office and entitled "Intelligent Device, Float and Unmanned Aerial Vehicle", both of which are hereby incorporated by reference in their entirety.

### TECHNICAL FIELD

The present application relates to the technical field of unmanned aerial vehicle (UAV), and specifically provides an unmanned aerial vehicle assembly, arm, float and unmanned aerial vehicle.

### BACKGROUND

Most of the existing ordinary UAVs do not have the waterproof function. Even for a waterproof UAV, it is too complex in design and structure to be universal. Moreover, the heat dissipation and air connectivity of the existing waterproof UAVs have not been well solved yet, which limits the application scenarios and areas of UAVs.

### SUMMARY OF THE INVENTION

This patent application is provided for the purpose of enabling an ordinary UAV to have the waterproof function while improving the heat dissipation efficiency and air connectivity of the UAV.

The present application provides a UAV assembly that plays a waterproof role and is configured to prevent a UAV part inside the assembly from contacting with water. The assembly comprises a first component comprising at least one opening, and a second component configured to seal the opening of the first component so as to prevent water from pouring into the assembly from the opening.

Alternatively, at least one first through hole is provided on the UAV assembly, via which the UAV part inside the UAV assembly is connected to an external device.

Alternatively, the first through hole is provided on the first component, or the first through hole is provided on the second component, or the first through hole is provided at a joint between the first component and the second component.

Alternatively, providing the first through hole at the joint between the first component and the second component comprises disposing one portion of the first through hole on the first component and disposing the other portion of the first through hole on the second component, such that the first through hole is formed as a whole at the joint when the second component seals the opening of the first component.

Alternatively, a first sealing ring is provided around the first through hole, the first sealing ring configured to prevent water from leaking at a place where the external device is in contact with the UAV assembly when the external device is connected with the UAV part via the first through hole.

Alternatively, a second sealing ring is provided at the joint between the second component and the first component to prevent water from penetrating into the UAV assembly from the joint.

Alternatively, the first component and the second component are connected together via at least one buckle configured to seal the opening of the first component.

Alternatively, the buckle comprises a boss and a ferrule that fixedly connects the first component and the second component together by sleeving the boss.

Alternatively, the ferrule is provided on the first component, and the boss is provided on the second component.

Alternatively, the UAV assembly further comprises a rotating part comprising a rotating column provided on the second component and a rotating groove provided on the first component; The second component in a state of connection with the first component is rotated by the rotating part relative to the first component.

Alternatively, the first component and/or the second component at least have one portion which is transparent.

Alternatively, the shape of the first component and/or the shape of the second component are oval or circular.

Alternatively, the UAV assembly further comprises a waterproof and breathable part;

The waterproof and breathable part is provided on the UAV assembly and configured to prevent water leakage and allow passage of air.

Alternatively, the waterproof and breathable part is a waterproof and breathable film.

Alternatively, parts inside the UAV assembly that need to be in contact with air are connected with the waterproof and breathable part.

Alternatively, the UAV assembly further comprises a heat dissipation part;

The heat dissipation part is provided on the UAV assembly, and configured to transmit out heat generated inside the UAV assembly.

Alternatively, heat generating parts inside the UAV assembly are close to or in contact with the heat dissipation part.

Alternatively, the heat dissipation part is made of a material with good heat conduction.

One embodiment of the present application further provides a UAV comprising the UAV assembly mentioned above and a UAV body comprising a fuselage body mounted inside the UAV assembly, and an arm that passes through a through hole on the UAV assembly to connect with the fuselage body.

Alternatively, the arm comprises a connecting end inside which a receiving cavity is formed, and a first arm body at least connected with the connecting end, the receiving cavity being waterproof by means of a waterproof part at least provided at a joint between the connecting end and the first arm body.

Alternatively, an electronic component is provided inside the receiving cavity.

Alternatively, the electronic component comprises a circuit board, and the waterproof part is also provided between a mounting surface of the circuit board and a cavity wall of the receiving cavity.

Alternatively, the first arm body is formed with a first channel along an axial direction thereof, and the waterproof part separates the receiving cavity from the first channel.

Alternatively, the waterproof part is provided with a perforation for a connecting wire to pass through, and a third sealing ring is provided between the connecting wire and a wall of the perforation.

Alternatively, the arm further comprises a second arm body at least connected with the connecting end, and the waterproof part is further provided at a joint between the connecting end and the second arm body.

Alternatively, the second arm body is formed with a second channel along an axial direction thereof, and the waterproof part separates the receiving cavity from the second channel.

Alternatively, the first arm body and the second arm body extend in different directions respectively.

Alternatively, the second arm body can be folded relative to the first arm body.

Alternatively, a second through hole and a third through hole are provided respectively on opposite sides of the first arm body and the second arm body which are close to the connecting end, and the connecting wire led out from the connecting end passes from the second through hole, through the third through hole, and into the channel inside the second arm body.

Alternatively, the arm body further comprises a first unipod and a second unipod correspondingly connected with free ends of the first arm body and the second arm body respectively.

Alternatively, the first unipod can be rotated and folded relative to the first arm body, and the second unipod can be rotated and folded relative to the second arm body.

Alternatively, the arm body further comprises a power assembly provided at the free ends of the first arm body and the second arm body.

Alternatively, the waterproof part is made of an elastic material.

Alternatively, the UAV further comprises a float connected to the arm body, the float being configured to increase buoyancy.

Alternatively, the float comprises a connecting piece and a float body connected with the connecting piece, and is connected onto the arm body via the connecting piece.

Alternatively, a hollow cavity is formed inside the float.

Alternatively, a plurality of grooves are provided inwards from a top surface of the float.

Alternatively, a perforation is provided on a bottom of the groove.

Alternatively, the arm comprises a connecting end inside which a receiving cavity is formed, and a first arm body at least connected with the connecting end, the receiving cavity being waterproof by means of a waterproof protective layer at least provided at a joint between the connecting end and the first arm body.

Alternatively, the waterproof protective layer is a waterproof glue or a waterproof film.

The present application further provides an arm connected to a UAV, the arm comprising a connecting end inside which a receiving cavity is formed, and a first arm body at least connected with the connecting end, the receiving cavity being waterproof by means of a waterproof part at least provided at a joint between the connecting end and the first arm body.

Alternatively, an electronic component is provided inside the receiving cavity.

Alternatively, the electronic component comprises a circuit board, and the waterproof part is also provided between a mounting surface of the circuit board and a cavity wall of the receiving cavity.

Alternatively, the first arm body is formed with a first channel along an axial direction thereof, and the waterproof part separates the receiving cavity from the first channel.

Alternatively, the waterproof part is provided with a perforation for a connecting wire to pass through, and a third sealing ring is provided between the connecting wire and a wall of the perforation.

Alternatively, the arm further comprises a second arm body at least connected with the connecting end, and the waterproof part is further provided at a joint between the connecting end and the second arm body.

Alternatively, the second arm body is formed with a second channel along an axial direction thereof, and the waterproof part separates the receiving cavity from the second channel.

Alternatively, the first arm body and the second arm body extend in different directions respectively.

Alternatively, the second arm body can be folded relative to the first arm body.

Alternatively, a second through hole and a third through hole are provided respectively on opposite sides of the first arm body and the second arm body which are close to the connecting end, and the connecting wire led out from the connecting end passes from the second through hole, through the third through hole, and into the channel inside the second arm body.

Alternatively, the arm further comprises a first unipod and a second unipod correspondingly connected with free ends of the first arm body and the second arm body respectively.

Alternatively, the first unipod can be rotated and folded relative to the first arm body, and the second unipod can be rotated and folded relative to the second arm body.

Alternatively, the arm further comprises a power assembly provided at the free ends of the first arm body and the second arm body.

Alternatively, the waterproof part is made of an elastic material.

The present application further provides an arm connected to a UAV, the arm comprising a connecting end inside which a receiving cavity is formed, and a first arm body at least connected with the connecting end, the receiving cavity being waterproof by means of a waterproof protective layer at least provided at a joint between the connecting end and the first arm body.

Alternatively, the waterproof protective layer is a waterproof glue or a waterproof film.

The present application further provides a float configured to increase buoyancy, the float comprising a connecting piece and a float body connected with the connecting piece, and is connected onto the arm as described above via the connecting piece.

Alternatively, a hollow cavity is formed inside the float.

Alternatively, a plurality of grooves are provided inwards from a top surface of the float.

Alternatively, a perforation is provided on a bottom of the groove.

### BRIEF DESCRIPTION OF THE DRAWINGS

FIG. 1 is a schematic diagram of a UAV assembly of a first type according to one embodiment of the present application;
FIG. 2 is a schematic diagram of a UAV assembly of a second type according to one embodiment of the present application;
FIG. 3 is a schematic diagram of a UAV assembly of a third type according to one embodiment of the present application;
FIG. 4 is a second schematic diagram of the UAV assembly of the third type according to the embodiment of the present application;
FIG. 5 is a schematic diagram of the combination of the UAV assembly of the third type with a UAV according to one embodiment of the present application;
FIG. 6 is a second schematic diagram of the combination of the UAV assembly of the third type with the UAV according to the embodiment of the present application;
FIG. 7 is a third schematic diagram of the UAV assembly of the third type according to the embodiment of the present application;
FIG. 8 is a fourth schematic diagram of the UAV assembly of the third type according to the embodiment of the present application;
FIG. 9 is a schematic diagram of the UAV assembly comprising a waterproof and breathable part according to one embodiment of the present application;
FIG. 10 is a schematic diagram of the UAV assembly comprising a heat dissipation part according to one embodiment of the present application; and
FIG. 11 is a schematic diagram of a UAV according to one embodiment of the present application;
FIG. 12 is a perspective view of an arm provided in one embodiment of the present application;
FIG. 13 is a bottom view of the arm of FIG. 12;
FIG. 14 is a structural view of the interior of the connecting end of FIG. 12;
FIG. 15 is a schematic diagram of the connection between a float and an arm provided in the present application;
FIG. 16 is a structural diagram of a float provided in one embodiment of the present application; and
FIG. 17 is a structural diagram of another UAV provided in one embodiment of the present application.

In the drawings, 100 - UAV assembly; 101 - first component; 102 - second component; 103 - opening; 104, 115 - waterproof ring; 105 - first through hole; 106 - fuselage body; 107 - external device; 108 -boss; 109 - ferrule; 110 - rotating column; 111 - rotating groove; 1111 - structural plate; 112 -waterproof and breathable part; 113 - heat dissipation part; 114 - arm; 900 - UAV; 911 - connecting end; 913 - first arm body; 9111 - electrical interface; 9112 - antenna interface; 9113 - data interface; 9114 - slot; 9115 - abutment member; 9116 - receiving cavity; 9101 - electronic component; 91011 - circuit board; 91012 - antenna wiring piece; 91013 - pin; 9131 - first free end; 9132 - first channel; 916 - waterproof part; 915 - second arm body; 9151 - second free end; 9133 - second through hole; 9153 - third through hole; 912 - first monopod; 914 - second monopod; 920 - float; 921/921A - connecting piece; 922/922a - float body; 9211a - hook piece; 9212a - ribbon-shaped connecting piece; 9213a - slot hole; 9221a - float main body; 9222a - main body connecting part; 9223a - transverse perforation; 9224a - top wall; 9225a - bottom wall; 9226a - first longitudinal perforation; 9227a - second longitudinal perforation; 930 - fuselage; 931 - base body; 933 - cover body; 9311 - connecting part.

### DETAILED DESCRIPTION OF THE EMBODIMENTS OF THE INVENTION

Certain exemplary embodiments are described below only in a brief manner. Just as those skilled in the art will appreciate, changes in various ways to the embodiments described herein can be carried out without departing from the spirit or scope of the present application. Therefore, the drawings and the following description are deemed essentially exemplary, instead of limitative.

In the description of the present application, it needs to be understood that the orientation or position relations denoted by such terms as "central" "longitudinal" "latitudinal" "length" "width" "thickness" "above" "below" "front" "rear" "left" "right" "vertical" "horizontal" "top" "bottom" "inside" "outside" "clockwise" "counterclockwise" and the like are based on the orientation or position as shown in the accompanying drawings, and are used only for the purpose of facilitating description of the present application and simplification of the description, instead of indicating or suggesting that the denoted devices or elements must be specifically oriented, or configured or operated in some specific orientation. Thus, such terms should not be construed to limit the present application. In addition, such terms as "first" and "second" are only used for the purpose of description, rather than indicating or suggesting relative importance or implicitly indicating the number of the designated technical features. Accordingly, features defined with "first" or "second" may, expressly or implicitly, include one or more of such features. In the description of the present application, "plurality" means two or above, unless otherwise defined explicitly and specifically.

In the description of the present application, it needs to be noted that, unless otherwise specified and defined explicitly, such terms as "mount" "link" and "connect" should be understood as generic terms. For example, connection may refer to fixed connection, dismountable connection, or integrated connection; also to mechanical connection, electric connection or intercommunication; further to direct connection, or connection by an intermediary medium; or even to internal communication between two elements or interaction between two elements. For those skilled in the art, they can construe the specific meaning of such terms herein in light of specific circumstances.

Herein, unless otherwise specified and defined explicitly, if a first feature is "above" or "below" a second one, this may cover the direct contact between the first and second features, also cover the contact via another feature therebetween, instead of the direct contact. Furthermore, if a first feature "above", "over" or "on the top of' a second one, this may cover that the first feature is right above or on the inclined top of the second feature, or just indicate that the first feature has a horizontal height higher than that of the second feature. If a first feature is "below", "under" or "on the bottom of' a second feature, this may cover that the first feature is right below and on the inclined bottom of the second feature, or just indicates that the first feature has a horizontal height lower than that of the second feature.

The disclosure below provides many different embodiments and embodiments so as to achieve different structures described herein. In order to simplify the disclosure herein, the following gives the description of the parts and arrangements embodied in specific embodiments. Surely, they are just for the exemplary purpose, not intended to limit the present application. Besides, the present application may repeat a reference number and/or reference letter in different embodiments, and such repeat is for the purpose of simplification and clarity, which does not represent any relation among various embodiments and/or arrangements as discussed.

Some embodiments of the present application are described below in the accompanying drawings. It should be understood that the embodiments described herein are only for the purpose of illustrating and explaining, instead of restricting, the present application.

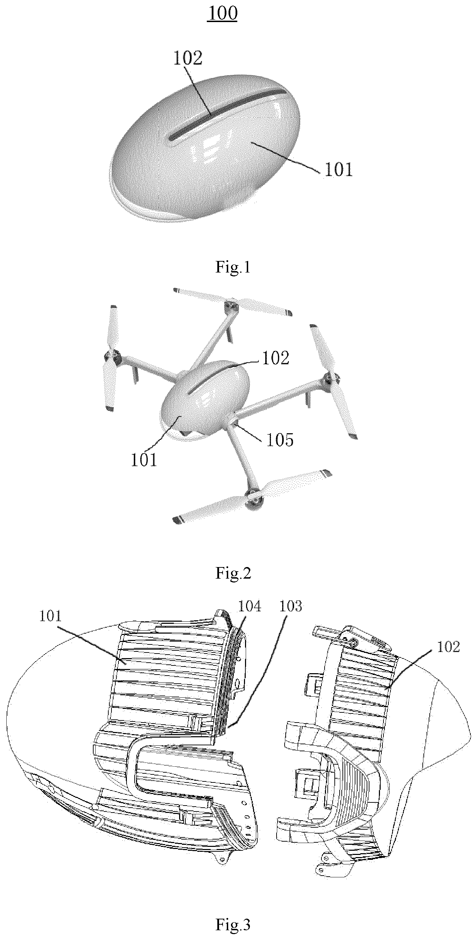

As shown in FIG. 1, one embodiment disclosed by the present application is a UAV assembly 100 that plays a waterproof role and is configured to prevent a UAV part inside the UAV assembly 100 from contacting with water. The UAV assembly 100 may comprise a first component 101 and a second component 102. The first component 101 comprises at least one opening, and the second component 102 is configured to seal the opening of the first component 101 so as to prevent water from pouring into the UAV assembly 100 through the opening.

The first component 101 that plays a waterproof role has at least one opening, through which a UAV part can be placed into the first component 101, and which can be sealed by the second component 102 in order to prevent water from pouring into the first component 102 through the opening. The UAV part may be a UAV as a whole or a portion of the UAV.

In one embodiment, there may be only one opening on the first component 101, and the second component 102 is configured to seal the opening on the first component 101. As shown in FIG. 1, by means of sealing other openings, the UAV part can enter UAV assembly 100 through the opening.

For example, the first component 101 may be made of an elastic material, and the second component 102 may be a waterproof zipper. Alternatively, the first component 101 may be a UAV enclosure made of the elastic material, the UAV may be put into the first component 101 through the opening on the first component 101, and the waterproof zipper is used to seal the opening so as to playing a role in protecting the UAV. The second component 102 may also be a waterproof buckle, or the second component 102 may also be other waterproof parts that can prevent water from pouring through the opening of the first component 101.

On the basis of FIG. 1, as shown in FIG. 2, there is at least one first through hole 105 on the first component 101 made of the elastic material, an external device may be connected with a UAV fuselage inside the first component 101 via the first through hole 105. The first component 101, due to its elastic material, closely fits with the external device at positions in contact with the external device so as to prevent water from penetrating through the positions where the external device contacts the first component 101, such that the UAV part inside the first component 101 has the waterproof function.

When the UAV part in the first component 101 is a fuselage body of the UAV, the external device may be an arm of the UAV, which can form a waterproof UAV with the fuselage body of the UAV. It may be understood that in some other embodiments, the external device may also be other devices that can be connected with the fuselage body in the first component 101, for example, a handheld support that may form a waterproof handheld camera together with the fuselage body equipped with a gimbal camera.

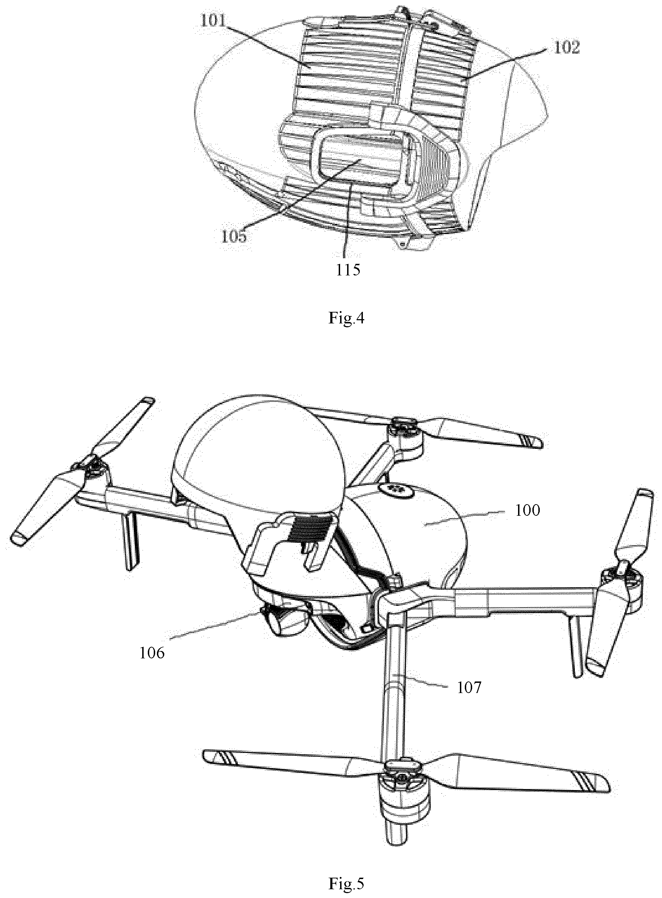

As shown in FIGs. 3 and 4, the present application discloses a UAV assembly 100 that plays a waterproof role and is configured to prevent a UAV part inside the UAV assembly 100 from contacting with water. The UAV assembly 100 may comprise a first component 101 and a second component 102. The first component 101 comprises at least one opening 103, and the second component 102 is configured to seal the opening 103 of the first component 101 so as to prevent water from pouring into the UAV assembly 100 from the opening 103.

It need be noted that the UAV part may be a UAV as a whole or a portion of the UAV.

The first component 101 has at least one opening 103 thereon, the second component 102 may seal the opening 103 on the first component 101 to form the UAV assembly 100 as a whole, a second sealing ring may be provided at a joint between the second component 102 and the first component 101, and may be a waterproof ring 104 in FIG. 3 to prevent water from penetrating into the UAV assembly 100 through the joint after the second component 102 seals the opening 103 of the first component 101, and the waterproof ring 104 may be made of an elastic material in some cases. A groove may be provided at the opening 103 of the first component 101, through which the waterproof ring 104 may be fixed at the opening 103 of the first component 101, or a protrusion is provided at the opening 103 of the first component 101, on which the waterproof ring 104 may be fixed through its own groove. When the first component 101 and the second component 102 are combined, the waterproof ring 104 is squeezed by the first component 101 and the second component 102 so as to fill up a gap at the joint, such that the joint plays a waterproof role. For example, the UAV may be placed inside the UAV assembly 100 through the opening 103 on the first component 101, thereby forming a waterproof UAV.

Alternatively, the UAV assembly 100 may be provided with at least one first through hole 105 through which the UAV part inside the UAV assembly 100 can be connected to the external device. The first through hole 105 may be provided on the first component 101, or the first through hole 105 may be provided on the second component 102, or the first through hole 105 may be provided at the joint between the first component 101 and the second component 102. The external device may be connected with the UAV part inside the UAV assembly 100 via the first through hole 105, and a first sealing ring may be provided around the first through hole 105. For example, a waterproof ring 115 in FIG. 4 may serve as the first sealing ring which can prevent water leakage occurring at a place where the external device is in contact with the vicinity of the first through hole 105. Alternatively, the waterproof ring 115 may be made of an elastic material, a groove may be provided around the first through hole 105, and the waterproof ring 115 may be fixed around the first through hole 105 by the groove, or a protrusion may be provided around the first through hole 105, and the waterproof ring 115 may be fixed on the protrusion around the first through hole 105 by the groove of its own.

In one embodiment, when the first through hole 105 is provided at the joint between the first component 101 and the second component 102, a portion of the first through hole 105 may be provided on the first component 101 while the other portion of the first through hole 105 may be provided on the second component 102, and a waterproof ring may be provided around both portions of the first through hole 105, such that a complete first through hole 105 may be formed at the joint between the first component 101 and the second component 102 after the second component 102 seals opening 103 of the first component 101. The waterproof ring 115 around the first through hole 105 may also be divided into two portions. The waterproof ring around the first through hole 105 on the first component 101 is connected with the waterproof ring at the joint with the first component 101, such that a complete waterproof ring 115 is formed around the first through hole 105 after the second component 102 seals the opening 103 of the first component 101.

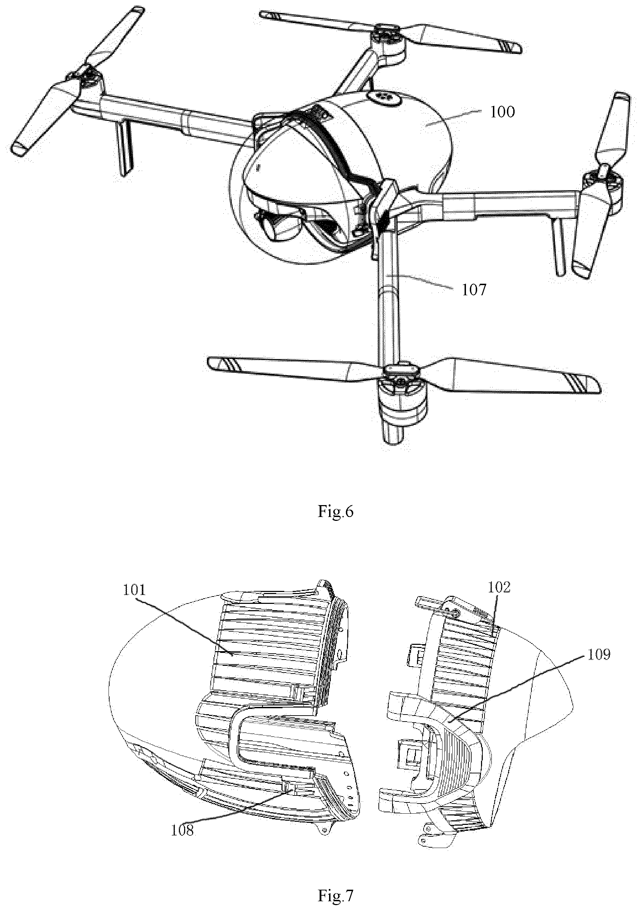

For example, as shown in FIGs. 5 and 6, the UAV part inside the UAV assembly 100 may be a fuselage body 106 of the UAV. The fuselage body 106 may be placed into the first component 101 via the opening on the first component 101, the opening is then sealed by the second component 102, and the external device 107 may be connected with fuselage body 106 of the UAV via the first through hole 105. When the external device 107 is an arm of the UAV, a complete waterproof UAV may be formed. When the external device 107 is other devices or mechanical structures equipped with power source, a complete waterproof intelligent device may be formed.

As shown in FIG. 7, in some embodiments, the first component 101 and the second component 102 may be connected together by at least one buckle so as to seal the opening of the first component 101. The buckle may comprise a boss 108 and a ferrule 109. The ferrule 109 may fixedly connect the first component 101 and the second component 102 together by sleeving the boss 108. The ferrule 109 may be provided on the second component 102, and the boss 108 may be provided on the first component 101. When the second component 102 is connected with the first component 101, the ferrule 109 protrudes to sleeve onto the boss 108, and the first component 101 and the second component 102 may be closely connected by pulling back the ferrule 109. The function of the buckle also enables the joint between the first component 101 and the second component 102 to play a sealing role.

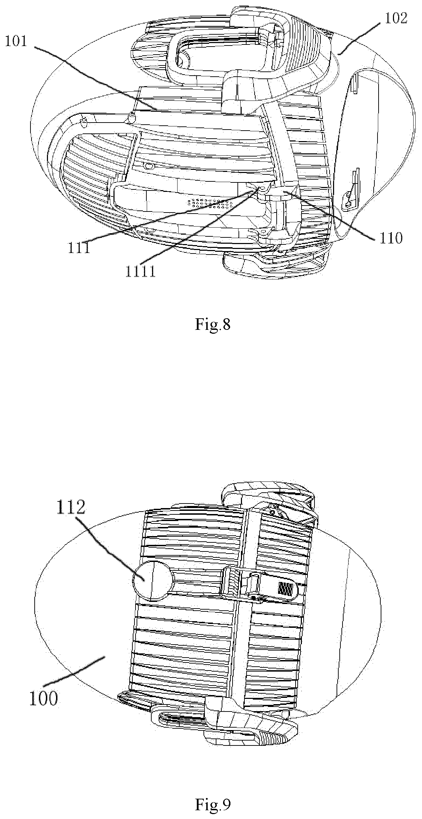

As shown in FIG. 8, the UAV assembly may further comprise a rotating part that may comprise a rotating column 110 and a rotating groove 111. The rotating column 110 may be provided on the second component 102, and the rotating groove 111 may be provided on the first component 101. The second component 102 in a state of connection with the first component 101 may be rotated by the rotating part relative to the first component 101.

The rotating groove 111 may be composed of two vertical structural plates 1111. Screw holes may be provided on the structural plates 1111, the rotating column 110 may be provided with screw holes corresponding to those on structural plates 1111, and the rotating column 110 may be provided between two structural plates 1111. The rotating groove 111 and the rotating column 110 may be connected by bolts or screws so as to ensure that the first component 101 and the second component 102 are always connected together, and the second component 102 in the state of connection with the first component 101 can be rotated by the rotating part relative to the first component 101.

The rotating part may cooperate with a buckle. When the UAV assembly 100 includes one buckle and one rotating part, the second component 102 can be rotated relative to the first component 101 so as to open or seal the opening of the first component 101. When the opening of the first component 101 is sealed, it is necessary for the rotating part to cooperate with the buckle so as to seal the opening completely. Alternatively, the number of the buckle may be more than one, and a plurality of the buckles cooperate with the rotating part to seal the opening.

In some embodiments, in the UAV assembly 100 as described above, at least a portion of the first component 101 and/or the second component 102 comprised therein is transparent. For example, when the UAV body is enclosed into the UAV assembly 100, the portion of the UAV assembly 100 corresponding to a camera on the UAV may be transparent, such that the camera can normally capture images outside the UAV assembly 100.

In the embodiments of the present application, the first component 101 and/or the second component 102 may be in any shape capable of enclosing the UAV part, for example, the shape of the first component and/or the shape of the second component are ellipse or circular.

As shown in FIG. 9, the UAV assembly 100 may further comprise a waterproof and breathable part 112 that may be provided on the UAV assembly 100 and can prevent water leakage and allow passage of air. Parts inside the UAV assembly 100 that need to be in contact with air are connected with the waterproof and breathable part 112 and can prevent water penetration. For example, the part that needs to be in contact with air may be a barometer of the UAV. The waterproof and breathable part 12 may be provided on the first component or the second component. In some embodiments, the waterproof and breathable part 112 may be a waterproof and breathable film.

For example, when the fuselage body of the UAV is enclosed into the UAV assembly 100, the arm of the UAV may pass through the first through hole 105 to be connected with the fuselage body, and the barometer of the UAV may contact with air via the waterproof and breathable part 112 so as to acquire data, which not only ensures the waterproofness of the UAV, but also guarantees that each part of the UAV can work normally.

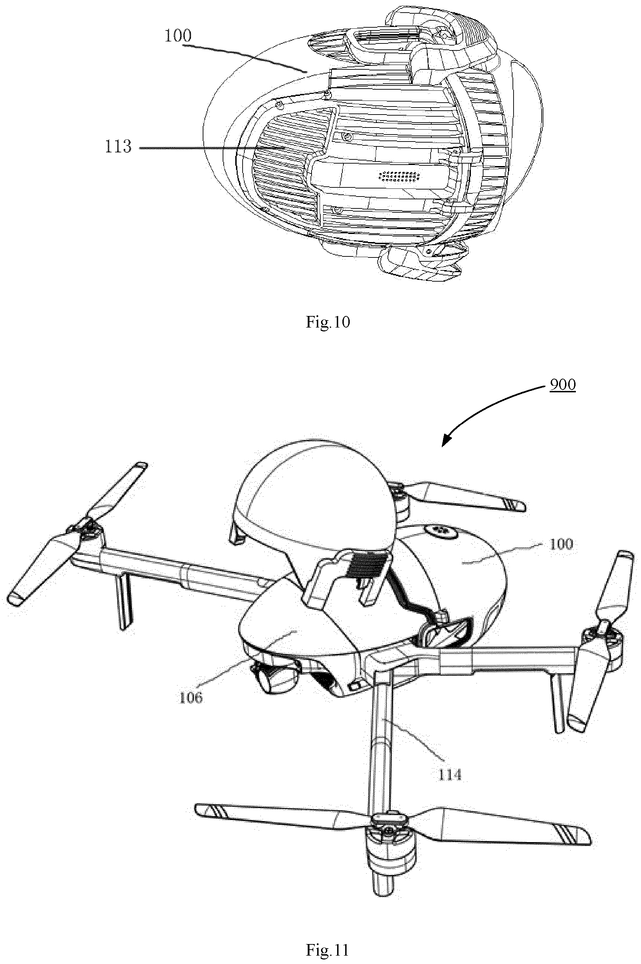

As shown in FIG. 10, the UAV assembly 100 may further comprise a heat dissipation part 113. The heat dissipation part 113 may be provided on the UAV assembly 100, which is configured to dissipate heat generated inside the UAV assembly 100. The heat dissipation part 113 may be provided on the first component 101 or the second component 102. The heat generating parts inside the UAV assembly 100 are close to or in contact with the heat dissipation part 113. The heat dissipation part 113 is made of a material with good heat conduction. For example, the heat dissipation part 113 may be a waterproof shell mounted on the fuselage of the UAV, the waterproof shell including a heat dissipation area configured to dissipate the heat generated during the operation of the fuselage in time, the material of which may be metal materials such as steel, aluminum, aluminum alloy and copper.

Surely, it may be understood that what is described above only serve as an example, in which metal materials such as steel, aluminum, aluminum alloy and copper are used as the material of the heat dissipation area. While in other embodiments, some other materials may also be used to make the heat dissipation area, as long as they can transfer the heat outside the waterproof shell in time.

For example, when the fuselage body of the UAV is enclosed into the UAV assembly 100, the arm of the UAV passes through the first through hole to be connected with the fuselage body, thereby forming a waterproof UAV. The UAV may transfer the heat generated inside the fuselage to the heat dissipation parts through a heat conduction system, and dissipate the heat through the heat dissipation part 113 of the UAV assembly, or the parts generating heat on the UAV may be directly close to or in contact with the heat dissipation part 113.

As shown in FIG. 11, the embodiment of the present application discloses a UAV 900 comprising a UAV body and the UAV assembly 100 provided above in the embodiment of the present application, the UAV body comprising a fuselage body 106 and an arm 114. The fuselage body 106 is installed inside the UAV assembly 100, and the arm 114 may pass through a through hole on the UAV assembly 100 to be connected with the fuselage body 106. For example, the arm 114 may pass through the first through hole 105 on the UAV assembly 100 to be connected with the fuselage body 106.

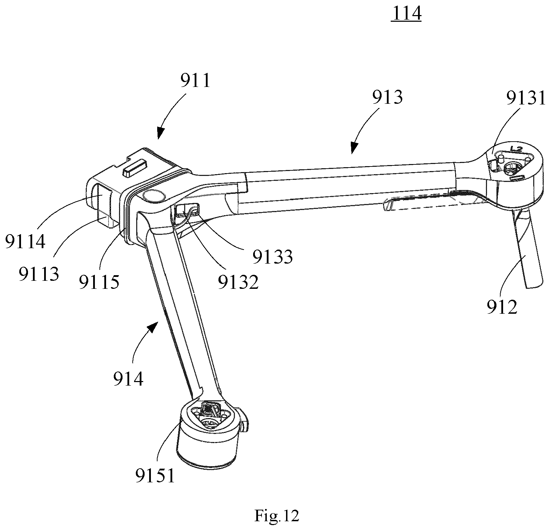

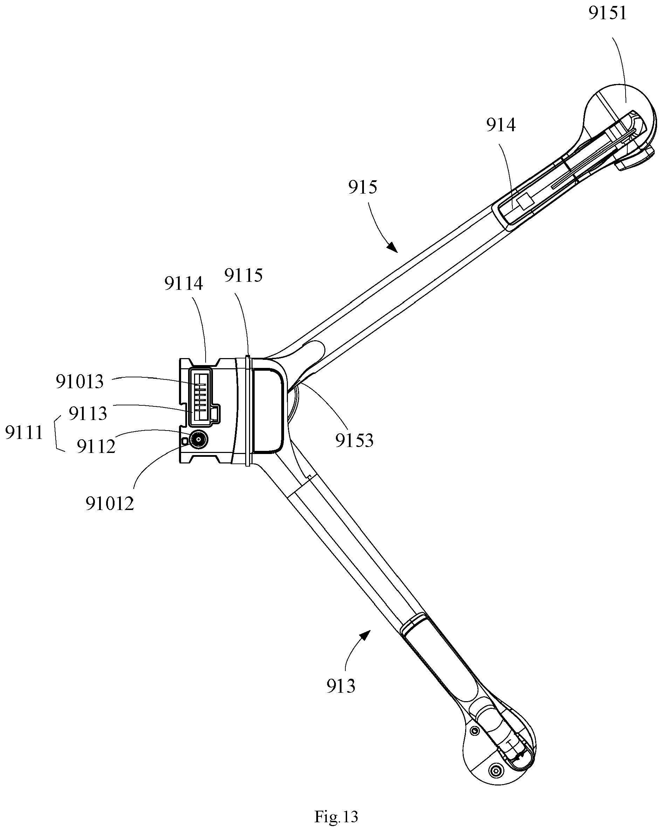

Alternatively, by referring to FIGs. 12 to 14, in the UAV provided in the present application, the arm 114 may include a connecting end 911 and a first arm body 913 at least connected to the connecting end 911.

The connecting end 911 is configured to be connected with the fuselage body 106 of the UAV so as to connect the arm 114 to the fuselage body 106, thereby forming the UAV. After the connecting end 911 is connected with the fuselage body 106, the arm 114 is fixed to the fuselage body 106.

In this embodiment, the connecting end 911 may be provided with an electrical interface 9111 configured to achieve electrical connection between the arm 114 and the fuselage body 106. In this embodiment, the electrical interface 9111 includes, but not limited to, an antenna interface 9112 and a data interface 9113. The antenna interface 9112 is configured to be connected with a corresponding interface on the fuselage body 106 so as to transmit antenna signals. The data interface 9113 is configured to be connected with a corresponding interface on the fuselage body 106 so as to achieve data communication between the arm 114 and the fuselage body 106. In one embodiment, the data interface 9113 may also be configured to supply power to the arm 114 via the fuselage body 106.

In this embodiment, a slot 9114 may be provided on the surface of the connecting end 911. The slot 9114 is configured to fit with a column arranged on a connecting part of the fuselage body 106 in connection with the arm 114 so as to achieve a fixed connection between the arm 114 and the fuselage body 106. In this embodiment, the slot 9114 may be provided on the outer side wall of the connecting end 911.

It may be understood that the column may also be arranged on the surface of the connecting end 911, while the slot is provided on the connecting part of the fuselage body 106. Then the slot fits with the column to achieve the fixed connection between the connecting end 911 and the fuselage body 106, further enabling the fixed connection between the arm 114 and the fuselage body 106. In addition, the slot or column of the connecting end 911 may also be arranged at other positions of the connecting end 911. For example, when the connecting end 911 is cuboid, the slot or the column may also be provided on the top or bottom surface of the connecting end 911.

In this embodiment, an abutment member 9115 may be provided annularly on the outer surface of the connecting end 911 close to the first arm body 913. The abutment member 9115 is configured to abut against the outer side wall of the fuselage body 106 when the fuselage body 106 is connected with the connecting end 911 to form a UAV, thereby preventing liquid from penetrating into the fuselage body 106 or the arm 114 from the position where the arm 114 are connected with the fuselage body 106.

A receiving cavity 9116 may be formed inside the connecting end 911. The receiving cavity 9116 is configured to receive an electronic component 9101. In this embodiment, the electronic component 9101 includes, but not limited to, a circuit board 91011, an antenna wiring piece 91012, and a pin 91013 leading out from the circuit board 91011. The position of the antenna wiring piece 91012 may correspond to that of the antenna interface 9112 and be exposed from the antenna interface 9112. The position of the pin 91013 may correspond to that of the data interface 9113 and be exposed from the data interface 9113. The interior of the receiving cavity 9116 may be waterproof by means of a waterproof part 916 capable of preventing liquid from penetrating into the receiving cavity 9116, further guaranteeing the normal operation of the arm 114.

It should be noted that the waterproof part 916 used above for waterproofness is only exemplary. In other embodiments of the present application, waterproofness may also be achieved in the form of, for example, a waterproof protective layer, such as a waterproof glue or a waterproof film provided at the joint between the connecting end 911 and the first arm body 913 for waterproofness.

The first arm body 913 is connected with the connecting end 911. The first arm body 913 and the connecting end 911 may be in fixed connection or rotatable connection. In this embodiment, the first arm body 913 is fixedly connected with the connecting end 911.

The first arm body 913 may include a first free end 9131 away from the connecting end 911. The first free end 9131 is configured to arrange a functional component (not shown). The functional component includes, but not limited to, an antenna component, a power assembly, etc. The antenna component is configured to transmit and receive signals. The power assembly is configured to provide power for navigation of a UAV formed after the arm 114 are connected with the fuselage body 106. In one embodiment, the power assembly may include a motor and a propeller connected to the motor. A first channel 9132 may be provided inside the first arm body 913 along its axial direction. The first channel 9132 is configured to be passed through by a connecting wire. The connecting wire may enable the electrical connection between the functional component and electronic component 9101 in the receiving cavity 9116.

The waterproof part 916 may be arranged at the joint between the connecting end 911 and the first arm body 913. In this embodiment, the waterproof part 916 may separate the receiving cavity 9116 from the first channel 9132.

In one embodiment, the waterproof part 916 provided at the joint between the connecting end 911 and the first arm body 913 may be made of an elastic material. The waterproof part 916 may separate the receiving cavity 9116 from the first channel 9132 by means of elastic squeeze by a cavity wall of the receiving cavity 9116 or a side wall of the first channel 9132, so as to prevent liquid from penetrating into the receiving cavity 9116 via the first channel 9132. The connecting wire may pass through an edge of the waterproof part 916 to penetrate the first channel 9132 from the receiving cavity 9116. Since the waterproof part 916 is made of an elastic material, the problem regarding liquid penetration into the receiving cavity 9116 caused by the arrangement of the connecting wire may be avoided while the connecting wire is pressed onto the cavity wall of the receiving cavity 9116 or the side wall of the first channel 9132.

In one embodiment, there is no limitation of the material of the waterproof part 916 arranged at the joint between the connecting end 911 and the first arm body 913. The waterproof part 916 may separate the receiving cavity 9116 from the first channel 9132, by means of blocking a cavity opening of the receiving cavity 9116 close to the first channel 9132 or a channel opening of the first channel 9132 close to the receiving cavity 9116. In this case, the waterproof part 916 may be provided with a perforation for the connecting wire to pass through, such that the connecting wire goes into the first channel 9132 from the receiving cavity 9116. In order to achieve waterproofness, a third sealing ring (not shown) may be arranged between a wall of the perforation and the connecting wire.

In this embodiment, the waterproof part 916 is also provided between a mounting surface of the circuit board 91011 and the cavity wall of the receiving cavity 9116. The waterproof part 916 is arranged between the mounting surface of the circuit board 91011 and the cavity wall of the receiving cavity 9116, so as to prevent liquid from penetrating into the circuit board 91011, further ensuring the normal operation of the circuit board 91011.

It may be understood that the waterproof part 916 may also be arranged at a position inside the receiving cavity 9116 corresponding to the antenna interface 9112 and the data interface 9113 so as to prevent liquid from penetrating into the receiving cavity 9116 from the antenna interface 9112 or the data interface 9113.

In this embodiment, the arm 114 may also include a second arm body 915 at least connected to the connecting end 911. The second arm body 915 and the first arm body 913 extend in different directions respectively.

The second arm body 915 and the connecting end 911 may be in fixed connection or rotatable connection. In this embodiment, the second arm body 915 is rotatably connected with the connecting end 911. For example, the second arm body 915 is pivotally connected with the connecting end 911. The second arm body 915 can be folded relative to the first arm body 913 so as to facilitate the storage of the arm 114.

The second arm body 915 may include the second free end 9151 away from the connecting end 911. The second free end 9151 is configured to arrange a functional component (not shown). The functional component includes but is not limited to an antenna component, a power assembly, etc. The antenna component may transmit and receive signals. The power assembly may provide navigation power for a UAV formed after the arm 114 is connected with the fuselage body 106. In one embodiment, the power assembly includes a motor and a propeller connected with the motor. A second channel (not shown) may be provided inside the second arm body 915 along its axial direction. The second channel is configured to be passed through by the connecting wire. The connecting wire can enable the electrical connection between the functional component and the electronic component 9101 in the receiving cavity 9116. In this embodiment, the second channel may terminate at an end of the second arm body 915 connected with the connecting end 911, that is, the second channel does not pass through the end of the second arm body 915 connected with the connecting end 911.

In this embodiment, a second through hole 9133 and a third through hole 9153 may be provided respectively on opposite sides of the first arm body 913 and the second arm body 915 which are close to the connecting end 911. The connecting wire connected with electronic component 9101 may enter into the first channel 9132 from the receiving cavity 9116, next through second through hole 9133 and third through hole 9153 in turn, and then into the second channel so as to connect electronic component 9101 inside the receiving cavity 9116 with the functional component arranged at the second free end 9151 of the second arm body 915.

It may be understood that the connecting wire connecting electronic component 9101 with the functional component arranged at the first free end 9131 of the first arm body 913, and the connecting wire connecting electronic component 9101 with the functional component arranged at the second free end 9151 of the second arm body 915 are connecting wires as arranged separately.

In one embodiment, the second arm body 915 may be in fixed connection with the connecting end 911, and the second channel is in communication with the receiving cavity 9116. The waterproof part 916 is also arranged at the joint between the connecting end 911 and the second arm body 915. The waterproof part 916 separates the receiving cavity 9116 from the second channel. In one embodiment, the waterproof part 916 arranged at the joint between the connecting end 911 and the second arm body 915 may be made of an elastic material. The waterproof part 916 may separate the receiving cavity 9116 from the second channel by means of elastic squeeze by the cavity wall of the receiving cavity 9116 or a side wall of the second channel, so as to prevent liquid from penetrating into the receiving cavity 9116 via the second channel. The connecting wire may pass through an edge of the waterproof part 916 to go into the second channel from the receiving cavity 9116. Since the waterproof part 916 is made of an elastic material, the problem regarding liquid infiltration into the receiving cavity 9116 caused by the arrangement of the connecting wire may be avoided while the connecting wire is pressed onto the cavity wall of the receiving cavity 9116 or the side wall of the second channel. In one embodiment, there is no limitation of the material of the waterproof part 916 arranged at the joint between the connecting end 911 and the second arm body 915. The waterproof part 916 may separate the receiving cavity 9116 from the second channel by means of blocking the cavity opening of the receiving cavity 9116 close to the second channel or a channel opening of the second channel close to the receiving cavity 9116. In this case, the the waterproof part 916 is provided with a perforation for the connecting wire to pass through, such that the connecting wire goes into the second channel from the receiving cavity 9116. In order to achieve waterproofness, a third sealing ring (not shown) is arranged between a wall of the perforation and the connecting wire.

In this embodiment, the arm 114 may also include a first unipod 912 and a second unipod 914. The first unipod 912 and the second unipod 914 may be connected to the free ends of the first arm body 913 and the second arm body 915, respectively. The first unipod 912 and the second unipod 914 are used to facilitate the smooth landing of a UAV formed after the arm 114 is connected with the fuselage body 106.

In one embodiment, the first unipod 912 and the second unipod 914 may be fixedly connected with free ends of the first arm body 913 and the second arm body 915, respectively.

In one embodiment, the first unipod 912 and the second unipod 914 may be rotatably connected with the first arm body 913 and the second arm body 915, respectively. The first unipod 912 can be rotated and folded relative to the first arm body 913, and the second unipod 914 can be rotated and folded relative to the second arm body 915 so as to facilitate the storage of the arm 114. In one embodiment, the rotation and folding of the unipod relative to the arm bodies may be conducted manually by a user. In one embodiment, the arm 114 may also include driving structures for driving the unipods to rotate (e.g., a first driving structure corresponding to the first unipod 912 and a second driving structure corresponding to the second unipod 914). The driving structures may be respectively arranged in the corresponding channels and connected with electronic component 9101 in the receiving cavity 9116 through a connecting wire. The rotation and folding of unipods relative to the arm bodies can be achieved by the corresponding driving structures.

The arm provided by the present application, when equipped with a waterproof part, avoids liquid penetrating into the connecting end, which helps to ensure the normal operation of the arm.

Alternatively, the UAV 900 may further comprise a float 920 connected to the arm 114 and configured to increase the buoyancy of the UAV and prevent the UAV 900 from sinking into water when the UAV 900 lands on the surface of water.

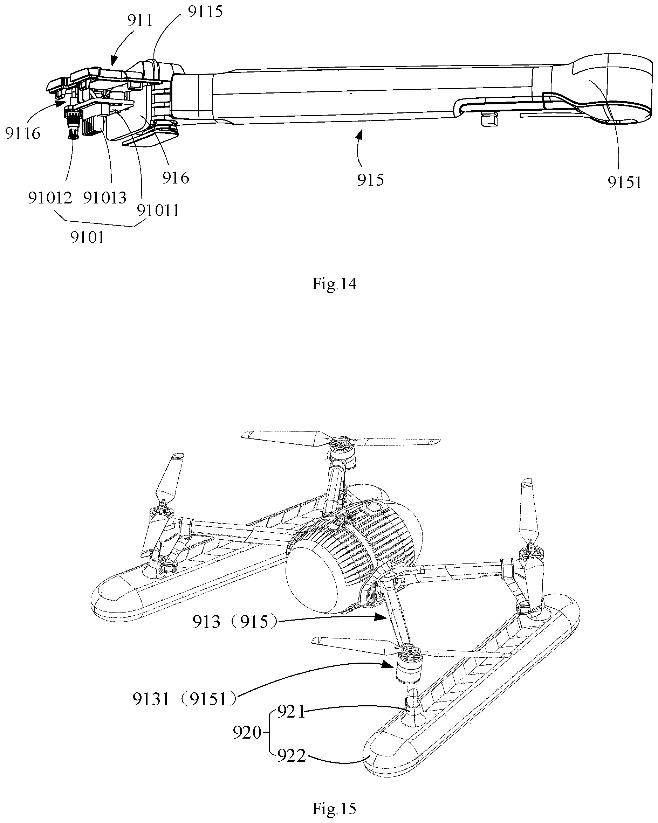

Alternatively, referring to FIG. 15, the float 920 may be selectively connected to the arm 114. The float 920 is configured to increase the buoyancy of the UAV and prevent the UAV from sinking into water when the UAV formed by the connection between the fuselage body 106 and the arm 114 lands on the surface of water. In this embodiment, the float 920 may be connected to the first arm body 913 and / or the second arm body 915 of the arm 114. The float 920 may include a connecting piece 921 configured to be connected to the arm body and a float body 922 connected with the connecting piece 921. Exemplarily, the connecting piece 921 may be a U-shaped hanging piece having both ends that can be connected with the float body 922. Prior to mounting of the functional component at the free end of the arm 114, the arm body of the arm 114 may go into the U-shaped hanging piece so as to connect the float 920 to the arm 114. The float body 922 may be made of a material having a density less than water (e.g., polyethylene, polypropylene, polyvinyl chloride, polystyrene, etc.). In order to increase the buoyancy and reduce the load when the UAV navigates, in one embodiment, a hollow cavity may be formed inside the float body 922, or a plurality of grooves may be set inwards from a top surface of the float body 922.

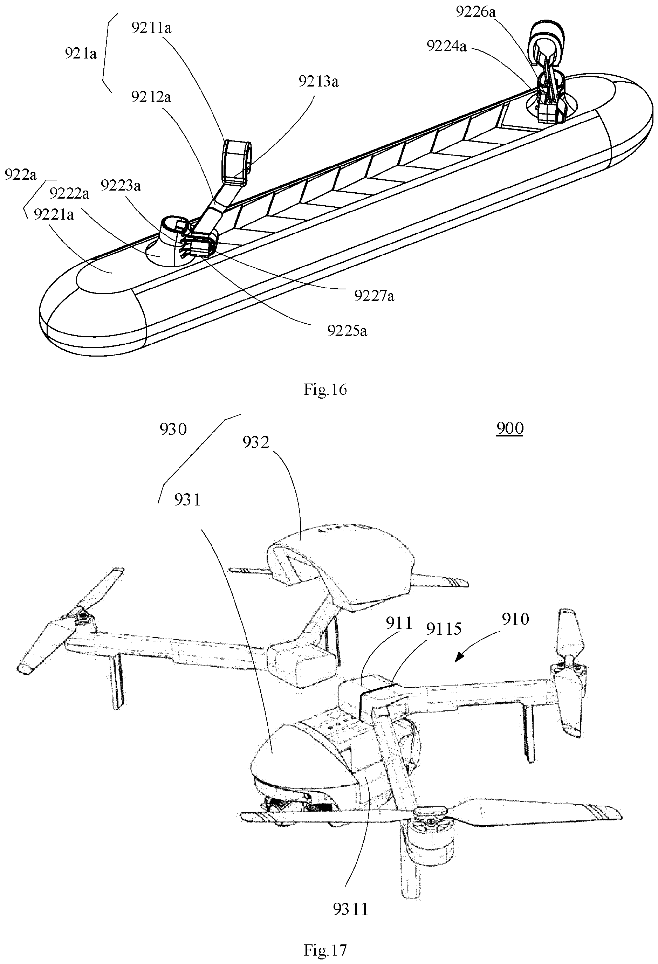

In order to prevent water pouring back into the groove when the UAV descends and lands onto the surface of water, thereby affecting the floating-aid performance of the float 920, a perforation can be provided on the bottom of the groove to facilitate the discharge of the water accumulated in the groove. Referring to FIG. 16, in another embodiment, the float 920a may include a connecting piece 921a and a float body 922a. The connecting piece 921a connects the float body 922a to the first arm body 913 and / or the second arm body 915 of the arm 114. The connecting piece 921a may include a hook piece 9211a and a ribbon-shaped connecting piece 9212a. The hook piece 9211a is configured to be connected to the first arm body 913 and / or the second arm body 915 of the arm 114. One end of the ribbon-shaped connecting piece 9212a may be connected with the hook piece 9211a, and the other end of the ribbon-shaped connecting piece 9212a may be connected with the float body 922a.

In this embodiment, the hook piece 9211a is substantially U-shaped, and the U-shaped opening of the hook piece 9211a has a width less than diameters of the first arm body 913 and the second arm body 915. The hook piece 9211a may be sleeved on the first arm body 913 and / or the second arm body 915 from the free end before the functional component is mounted on the free end of the arm 114. Or the hook piece 9211a may have a certain elasticity, and the width of its U-shaped opening may be widened under the action of external force and return to the original opening width after the external force disappears. Accordingly, the hook piece 9211a may be hung on the first arm body 913 and / or the second arm body 915 at any time as needed, without being restricted by whether the functional component has been mounted at the free end of the arm 114.

In this embodiment, both ends of the U-shaped hook piece 9211a may be provided with slot holes 9213a respectively. The slot holes 9213a are configured to be passed through by the ribbon-shaped connecting piece 9212a so as to connect the ribbon-shaped connecting piece 9212a with the hook piece 9211a. In this embodiment, the ribbon-shaped connecting piece 9212a may pass through the slot hole 9213a at one end of the hook piece 9211a from the U-shaped opening of the hook piece 9211a, then stick with a surface of the hook piece 9211a away from the opening thereof, further extend to the slot hole 9213a at the other end of the hook piece 9211a, and subsequently pass through the slot hole 9213a at the other end of the hook piece 9211a and go out from the U-shaped opening. Fixed connection of the ribbon-shaped connecting piece 9212a with the hook piece 9211a may be enabled by the friction force between the ribbon-shaped connecting piece 9212a and the surface of the hook piece 9211a, and the binding force of the slot hole 9213a onto the ribbon-shaped connecting piece 9212a.

In this embodiment, the float body 922a comprises a float main body 9221a and a main body connecting part 9222a provided on a top surface of the float main body 9221a and protruding therefrom. The ribbon-shaped connecting piece 9212a may be connected with main body connecting part 9222a. The main body connecting part 9222a may be provided with a transverse perforation 9223a that may include a top wall 9224a and a bottom wall 9225a. The top wall 9224a may be provided with a first longitudinal perforation 9226a, and the bottom wall 9225a may be provided with a second longitudinal perforation 9227a. The other end of the ribbon-shaped connecting piece 9212a may go from the first longitudinal perforation 9226a into the transverse perforation 9223a, then go out of the transverse perforation 9223a from the second longitudinal perforation 9227a, next go from an opening at one end of the transverse perforation 9223a into the transverse perforation 9223a, and go out of the transverse perforation 9223a from the first longitudinal perforation 9226a. By the binding force of the first longitudinal perforation 9226a, the second longitudinal perforation 9227a and the transverse perforation 9223a onto the ribbon-shaped connecting piece 9212a, the other end of the ribbon-shaped connecting piece 9212a may be fixedly connected with the main body connecting part 9222a.

In this embodiment, the float body 922a is substantially cuboid, and two main body connecting parts 9222a are arranged on one float body 922a. The two main body connecting parts 9222a may be located at two opposite ends of the float body 922a respectively. The number of the ribbon-shaped connecting pieces 9212a and the hook pieces 9211a may correspond to the number of the main body connecting parts 9222a, respectively.

Referring to FIG. 17, based on the same inventive concept, the present application further provides a UAV 900, comprising a fuselage 930 and the arm 114 as described above. The fuselage 930 is connected to the arm 114. The fuselage 930 includes a base body 931 and a cover body 933 buckled with the base body 931. The base body 931 is buckled with the cover body 933 so as to fasten the connecting end 911 of the arm to the interior of the fuselage 930. After the fuselage 930 is connected with the connecting end 911, the abutment member 9115 abuts against an outer wall of the fuselage 930 to prevent liquid from penetrating into the arm 114 or into the fuselage 930 from the joint between the arm and the fuselage 930. The base body 931 includes a connecting part 9311 configured to be connected to the connecting end 911. The connecting part 9311 may be provided with an interface (not shown) corresponding to the electrical interface 9111 of the connecting end 911 so as to enable the electrical connection between the fuselage 930 and the arm 114. The connecting part 9311 may also be provided with a column (not shown) connected with the slot 9114 of the connecting end 911 so as to enable the fixed connection between the fuselage 930 and the arm 114.

Last but not least, it should be noted that the contents described above are just some embodiments of the present application, and are not used to limit the present application. Although the detailed description of the present application has been provided with reference to the foregoing embodiments, those skilled in the art still may make modifications to the technical solutions recorded in various embodiments described above, or conduct equivalent replacement of some technical features therein. Any modification, equivalent replacement, or improvement, if only falling into the spirit and principles as stated herein, should be included in the protection scope of the present application.

### Industrial Practicability

The UAV body and the UAV assembly together form a waterproof UAV, thereby making the UAV have the function of taking off and landing on water.

Moreover, the waterproof and breathable part and/or the heat dissipation part are added to the UAV assembly, thereby enabling all components inside the UAV to operate normally, and solving the problem regarding poor heat dissipation of a waterproof UAV as caused by airtightness.

Moreover, ordinary UAVs would also have the waterproof function after being modified according to the technical solutions of the embodiments of the present application, thereby solving the problems regarding poor heat dissipation and poor air connectivity in waterproof UAVs, and expanding the application scenarios of the ordinary UAVs.

Moreover, the arm provided by the present application is equipped with a waterproof part, this prevents liquid from penetrating into the connecting end and further helps to guarantee the normal operation of the arm.

## Claims

1. An unmanned aerial vehicle (UAV) assembly, **characterized in that** the assembly plays a waterproof role and is configured to prevent a UAV part inside the assembly from contacting with water; the assembly comprises a first component comprising at least one opening, and a second component configured to seal the opening of the first component so as to prevent water from pouring into the assembly from the opening.

2. The assembly according to claim 1, **characterized in that** the UAV assembly is provided with at least one first through hole via which the UAV part inside the UAV assembly is connected to an external device.

3. The assembly according to claim 2, **characterized in that** the first through hole is provided on the first component, or the first through hole is provided on the second component, or the first through hole is provided at a joint between the first component and the second component.

4. The assembly according to claim 3, **characterized in that** providing the first through hole at the joint between the first component and the second component comprises: disposing a portion of the first through hole on the first component and disposing the other portion of the first through hole on the second component, such that the first through hole is formed as a whole at the joint when the second component seals the opening of the first component.

5. The assembly according to any of claims 2 to 4, **characterized in that** a first sealing ring is provided around the first through hole, the first sealing ring configured to prevent water from leaking at a place where the external device is in contact with the UAV assembly when the external device is connected with the UAV part via the first through hole.

6. The assembly according to any of claims 1 to 5, **characterized in that** a second sealing ring is provided at the joint between the second component and the first component so as to prevent water from penetrating into the UAV assembly from the joint.

7. The assembly according to any of claims 1 to 6, **characterized in that** the first component and the second component are connected together via at least one buckle configured to seal the opening of the first component.

8. The assembly according to claim 7, **characterized in that** the buckle comprises a boss and a ferrule that fixedly connects the first component and the second component together by sleeving the boss.

9. The assembly according to claim 8, **characterized in that** the ferrule is provided on the first component, and the boss is provided on the second component.

10. The assembly according to any of claims 1 to 9, **characterized in that** the UAV assembly further comprises a rotating part comprising a rotating column provided on the second component and a rotating groove provided on the first component; and the second component in a state of connection with the first component is rotated by the rotating part relative to the first component.

11. The assembly according to any of claims 1 to 10, **characterized in that** at least a portion of the first component and/or the second component is transparent.

12. The assembly according to any of claims 1 to 11, **characterized in that** the shape of the first component and/or the shape of the second component are oval or circular.

13. The assembly according to any of claims 1 to 12, **characterized in that** the UAV assembly further comprises a waterproof and breathable part; and
the waterproof and breathable part is provided on the UAV assembly and configured to prevent water leakage and allow passage of air.

14. The assembly according to claim 13, **characterized in that** the waterproof and breathable part is a waterproof and breathable film.

15. The assembly according to claim 13 or 14, **characterized in that** parts inside the UAV assembly that need to be in contact with air are connected with the waterproof and breathable part.

16. The assembly according to any of claims 1 to 15, **characterized in that** the UAV assembly further comprises a heat dissipation part; and
the heat dissipation part is provided on the UAV assembly and configured to transmit out heat generated inside the UAV assembly.

17. The assembly according to claim 16, **characterized in that** heat generating parts inside the UAV assembly are close to or in contact with the heat dissipation part.

18. The assembly according to claim 16 or 17, **characterized in that** the heat dissipation part is made of a material with good heat conduction.

19. An unmanned aerial vehicle (UAV), **characterized in that** the UAV comprises the UAV assembly according to any of claims 1 to 18, and a UAV body comprising a fuselage body mounted inside the UAV assembly and an arm that passes through a through hole on the UAV assembly to connect with the fuselage body.

20. The UAV according to claim 19, **characterized in that** the arm comprises a connecting end inside which a receiving cavity is formed, and a first arm body at least connected with the connecting end, the receiving cavity being waterproof by means of a waterproof part at least provided at a joint between the connecting end and the first arm body.

21. The UAV according to claim 20, **characterized in that** an electronic component is provided inside the receiving cavity.

22. The UAV according to claim 21, **characterized in that** the electronic component comprises a circuit board, and the waterproof part is also provided between a mounting surface of the circuit board and a cavity wall of the receiving cavity.

23. The UAV according to any of claims 19 to 22, **characterized in that** the first arm body is formed with a first channel along an axial direction thereof, and the waterproof part separates the receiving cavity from the first channel.

24. The UAV according to claim 23, **characterized in that** the waterproof part is provided with a perforation for a connecting wire to pass through, and a third sealing ring is provided between the connecting wire and a wall of the perforation.

25. The UAV according to any of claims 19 to 24, **characterized in that** the arm further comprises a second arm body at least connected with the connecting end, and the waterproof part is further provided at a joint between the connecting end and the second arm body.

26. The UAV according to claim 25, **characterized in that** the second arm body is formed with a second channel along an axial direction thereof, and the waterproof part separates the receiving cavity from the second channel.

27. The UAV according to claim 25 or 26, **characterized in that** the first arm body and the second arm body extend in different directions respectively.

28. The UAV according to claim 25 or 26 or 27, **characterized in that** the second arm body can be folded relative to the first arm body.

29. The UAV according to claim 28, **characterized in that** a second through hole and a third through hole are provided respectively on opposite sides of the first arm body and the second arm body which are close to the connecting end, and the connecting wire led out from the connecting end passes from the second through hole, through the third through hole, and into the channel inside the second arm body.

30. The UAV according to any of claims 25 to 29, **characterized in that** the arm body further comprises a first unipod and a second unipod correspondingly connected with free ends of the first arm body and the second arm body respectively.

31. The UAV according to claim 30, **characterized in that** the first unipod can be rotated and folded relative to the first arm body, and the second unipod can be rotated and folded relative to the second arm body.

32. The UAV according to any of claims 25 to 31, **characterized in that** the arm body further comprises a power assembly provided at the free ends of the first arm body and the second arm body.

33. The UAV according to any of claims 19 to 32, **characterized in that** the waterproof part is made of an elastic material.

34. The UAV according to any of claims 19 to 33, **characterized in that** the UAV further comprises a float connected to the arm body, the float being configured to increase buoyancy.

35. The UAV according to claim 34, **characterized in that** the float comprises a connecting piece and a float body connected with the connecting piece, and is connected onto the arm body via the connecting piece.

36. The UAV according to claim 35, **characterized in that** a hollow cavity is formed inside the float.

37. The UAV according to claim 35 or 36, **characterized in that** a plurality of grooves are provided inwards from a top surface of the float.

38. The UAV according to claim 37, **characterized in that** a perforation is provided on a bottom of the groove.

39. The UAV according to claim 19, **characterized in that** the arm comprises a connecting end inside which a receiving cavity is formed, and a first arm body at least connected with the connecting end, the receiving cavity being waterproof by means of a waterproof protective layer at least provided at a joint between the connecting end and the first arm body.

40. The UAV according to claim 39, **characterized in that** the waterproof protective layer is a waterproof glue or a waterproof film.

41. An arm connected to an unmanned aerial vehicle (UAV), **characterized in that** the arm comprises a connecting end inside which a receiving cavity is formed, and a first arm body at least connected with the connecting end, the receiving cavity being waterproof by means of a waterproof part at least provided at a joint between the connecting end and the first arm body.

42. The arm according to claim 41, **characterized in that** an electronic component is provided inside the receiving cavity.

43. The arm according to claim 42, **characterized in that** the electronic component comprises a circuit board, and the waterproof part is also provided between a mounting surface of the circuit board and a cavity wall of the receiving cavity.

44. The arm according to claim 41 or 42 or 43, **characterized in that** the first arm body is formed with a first channel along an axial direction thereof, and the waterproof part separates the receiving cavity from the first channel.

45. The arm according to claim 44, **characterized in that** the waterproof part is provided with a perforation for a connecting wire to pass through, and a third sealing ring is provided between the connecting wire and a wall of the perforation.

46. The arm according to any of claim 41 to 46, **characterized in that** the arm further comprises a second arm body at least connected with the connecting end, and the waterproof part is further provided at a joint between the connecting end and the second arm body.

47. The arm according to claim 46, **characterized in that** the second arm body is formed with a second channel along an axial direction thereof, and the waterproof part separates the receiving cavity from the second channel.

48. The arm according to claim 46 or 47, **characterized in that** the first arm body and the second arm body extend in different directions respectively.

49. The arm according to claim 46 or 47 or 48, **characterized in that** the second arm body can be folded relative to the first arm body.

50. The arm according to claim 49, **characterized in that** a second through hole and a third through hole are provided respectively on opposite sides of the first arm body and the second arm body which are close to the connecting end, and the connecting wire led out from the connecting end passes from the second through hole, through the third through hole, and into the channel inside the second arm body.

51. The arm according to any of claims 46 to 50, **characterized in that** the arm further comprises a first unipod and a second unipod correspondingly connected with free ends of the first arm body and the second arm body respectively.

52. The arm according to claim 51, **characterized in that** the first unipod can be rotated and folded relative to the first arm body, and the second unipod can be rotated and folded relative to the second arm body.

53. The arm according to any of claims 46 to 52, **characterized in that** the arm further comprises a power assembly provided at the free ends of the first arm body and the second arm body.

54. The arm according to any of claims 41 to 53, **characterized in that** the waterproof part is made of an elastic material.

55. An arm connected to an unmanned aerial vehicle (UAV), **characterized in that** the arm comprises a connecting end inside which a receiving cavity is formed, and a first arm body at least connected with the connecting end, the receiving cavity being waterproof by means of a waterproof protective layer at least provided at a joint between the connecting end and the first arm body.

56. The arm according to claim 55, **characterized in that** the waterproof protective layer is a waterproof glue or a waterproof film.

57. A float configured to increase buoyancy, **characterized in that** the float comprises a connecting piece and a float body connected with the connecting piece, and is connected onto the arm according to any of claims 41 to 56 via the connecting piece.

58. The float according to claim 57, **characterized in that** a hollow cavity is formed inside the float.

59. The float according to claim 57 or 58, **characterized in that** a plurality of grooves are provided inwards from a top surface of the float.

60. The float according to claim 59, **characterized in that** a perforation is provided on a bottom of the groove.
